Europäisches Patentamt

European Patent Office

Office européen des brevets

(19)

(11) Publication number: **0 239 348**
**A2**

# EUROPEAN PATENT APPLICATION

(12)

(21) Application number: **87302475.6**

(22) Date of filing: **23.03.87**

(51) Int. Cl.⁴: **C 09 J 7/02**
**C 09 J 3/00**

(30) Priority: **24.03.86 JP 65250/86**

(43) Date of publication of application:
**30.09.87 Bulletin 87/40**

(84) Designated Contracting States: **DE FR GB IT SE**

(71) Applicant: **NAGOYA OILCHEMICAL CO., LTD.**
**213-5 Honowari Minamishibata-cho**
**Tokai Aichi (JP)**

(72) Inventor: **Horiki, Seinosuke Nagoya Oilchemical Co., Ltd.**
**213-5 Honowari Minamishibata**
**Tokai Aichi (JP)**

**Makino, Reiji Nagoya Oilchemical Co., Ltd.**
**213-5 Honowari Minamishibata**
**Tokai Aichi (JP)**

**Ito, Kuninori Nagoya Oilchemical Co., Ltd.**
**213-5 Honowari Minamishibata**
**Tokai Aichi (JP)**

**Unno, Tetuji Nagoya Oilchemical Co., Ltd.**
**213-5 Honowari Minamishibata**
**Tokai Aichi (JP)**

(74) Representative: **Myerscough, Philip Boyd et ai**
**J.A.Kemp & Co. 14, South Square Gray's Inn**
**London, WC1R 5EU (GB)**

(54) **A new covering member.**

(57) A covering member comprising a base and an adhesive layer formed by coating a mixture of an emulsion-type adhesive and a water-soluble polymer onto a surface of a base and drying said coating possesses suitable stickiness, weatherability and heat resistance and has a large cohesive force which prevents the adhesive layer from transferring from the covering member to the surface of an article to which the covering member is applied.

EP 0 239 348 A2

## Description

## A NEW COVERING MEMBER

The present invention relates to a new covering member which may be used, for example, as a masking member or a packing member. Such masking members may be used in the coating processes of vehicles such as cars.

Hitherto, a covering member comprising a base and an adhesive layer has been provided as, for example, a masking member or a packing member. The covering member can be attached to a surface of an article by means of its adhesive layer. It is desirable to prevent the adhesive layer from transferring from the covering member to the surface of the article and to achieve this it is known to cross-link slightly the adhesive layer to give a large cohesive force or to mix a release agent with the adhesive layer to prevent it sticking to the surface of the article. The degree of cross-linking in the adhesive layer is important and if the degree of cross-linking is only a little higher than desired the stickiness of the adhesive layer is remarkably decreased, while sticking cannot be prevented if the degree of cross-linking is only a little lower than desired. Mixing a release agent with the adhesive layer may cause deterioration of properties such as stickiness, weatherability and heat resistance.

Accordingly, the present invention seeks to prevent the adhesive layer of the covering member from transferring to the surface of the article, while retaining the stickiness, weatherability and heat resistance properties of the adhesive layers.

Accordingly the present invention provides a covering member comprising a base and an adhesive layer formed by coating a mixture of an emulsion-type adhesive and a water-soluble polymer onto a surface of the base and drying said coating.

The addition of the water-soluble polymer to the emulsion-type adhesive may increase the cohesive force of the adhesive and at the same time give the adhesive a releasing property, that is to say prevent the adhesive layer from transferring to the surface of the article to which the covering member is attached. Since the water-soluble polymer preferably does not soften even at relatively high temperatures, the cohesive force of the adhesive does not decrease at these high temperatures. The water-soluble polymer does not unduly deteriorate the stickiness and weatherability properties of the adhesive.

The base used in the present invention may, for example, be paper, a plastic sheet, a plastic foam, cloth, a knitted or non-woven fabric or a metal sheet. A plastic foam, especially polystyrene foam, may be a suitable base if the covering member is to be used as a masking member.

The adhesive used is an emulsion-type adhesive to allow the water-soluble polymer to be dissolved and uniformly mixed in the emulsion. The adhesive may be, for example, a rubber latex such as a natural rubber latex, a styrene-butadiene rubber latex, a styrene-butadiene block copolymer latex, a styrene-isoprene block copolymer latex, acrylonitrile-butadiene rubber latex, an isoprene rubber latex, a chloroprene rubber latex, a butyl rubber latex, a polyisobutylene rubber latex, a polybutene rubber latex or a graft rubber latex, or a synthetic resin emulsion such as an acrylic resin emulsion, a methacrylic resin emulsion, a vinyl acetate resin emulsion, a vinyl propionate resin emulsion, a vinyl acetate-ethylene copolymer emulsion, a styrene resin emulsion, a vinyl chloride resin emulsion, a vinyl chloride-ethylene copolymer emulsion, a vinyl chloride-vinyl acetate copolymer emulsion, a vinylidene chloride resin emulsion or a vinyl ether resin emulsion. The rubber latex or synthetic resin emulsion should have stickiness at room temperature. Two or more kinds of rubber latex and synthetic resin may be mixed, and in this case the resulting mixture should have stickiness at room temperature. It may not always be necessary that any one rubber latex or synthetic resin emulsion component should itself have stickiness at room temperature.

Dibutylphthalate, dioctylphthalate, tricresylphosphate or terpene dimer as a plasticizer or softening agent may be mixed in the latex or emulsion. In this case, the resulting mixture should again have stickiness at room temperature. Any one or more than one of a stickifier such as a rosin, a rosin derivative, a petroleum resin, a cumarone resin, a terpene resin, a phenol resin or an alkyl phenol resin; an organic solvent or a wetting-agent such as toluene, xylene, ethyl acetate, n-butyl acetate, methyl-ethyl ketone, methyl-isobutyl ketone, cellosolve acetate, n-butyl cellosolve, ethylene glycol, diethylene glycol, propylene glycol, glycerine, polyethylene glycol or polypropylene glycol; or a filler such as talc, bentonite or calcium carbonate may be mixed with the adhesive.

The amount of water present in the emulsion is not critical since it has been found that it does not affect the adhesion of the covering member. It may, of course, affect the viscosity and time required to dry the emulsion. Suitably the emulsion-type adhesive has a solids content of from 40 to 60% by weight.

Examples of the water-soluble polymer include glue, gelatine, casein, starch, modified starch, dextrin, gum Arabic, sodium alginate, polyvinyl alcohol, carboxymethyl cellulose, methyl cellulose, hydroxyethyl cellulose, polysodium acrylate, polysodium methacrylate, polyacrylamide, polymethacrylamide, polyvinylmethyl ether, vinyl acetate-maleic acid copolymer, styrene-maleic acid copolymer, isobutylene-maleic acid copolymer, polyvinyl pyrrolidone and partially saponified polyacrylate.

The water-soluble polymer may generally be added to the emulsion-type adhesive in an amount of from 0.1 to 20%, desirably 0.1 to 10%, by weight of the emulsion. If the amount of water-soluble polymer added is more than 20 weight percent, the stickiness of the adhesive tends to decrease; however if the adhesive has enough stickiness, the adhesive may still be practical even when the amount of water-soluble polymer added is more than 20 weight percent. If the amount of water-soluble polymer added is less than 0.1 weight percent, it may be difficult to prevent the adhesive from transferring to the surface of an article to which the covering member is applied. Usually the water-soluble polymer may be added to the emulsion-type adhesive after the emulsion-type adhesive has been produced. However the water-soluble polymer may be added to the water which is used for the emulsion before the emulsion-type adhesive is produced (polymerized or emulsified). The water-soluble polymer may generally be added to the emulsion-type adhesive in the form of a powder, flakes or an aqueous solution. In the case of an aqueous solution the solids content of the solution is preferably from 0.1 to 10% by weight. The determination of the solids content is based on the desired viscosity characteristics of the aqueous solution and on the amount of solution to be added.

To prepare the covering member of the invention, the emulsion-type adhesive and water-soluble polymer may be coated onto a surface of a base and, if desired, this coating may be dried by heating to form the adhesive layer. The weight of the adhesive layer may commonly be from 50 to 100 g/m$^2$.

EXAMPLE 1

70 parts by weight of a natural rubber latex (50 weight percent solids content) and 50 parts by weight of a terpene resin emulsion were mixed together and two kinds of the water-soluble polymer were respectively mixed in as shown in Table 1. The amounts referred to are parts by weight.

TABLE 1

|  | 1 | 2 | 3 | 4 | 5 | 6 | 7 | 8 | 9 | 10 | 11 |
|---|---|---|---|---|---|---|---|---|---|---|---|
| Emulsion-type adhesive | 100 | 100 | 100 | 100 | 100 | 100 | 100 | 100 | 100 | 100 | 100 |
| Polysodium styrene sulfonate | – | 0.01 | 0.05 | 5 | 10 | 20 | – | – | – | – | – |
| Gelatin | – | – | – | – | – | – | 0.01 | 0.05 | 5 | 10 | 20 |

The resulting emulsion-type adhesives were respectively coated onto a surface of a panel of a polyethylene foam as a base in an amount of 50 g/m$^2$ and the adhesive layer was dried to produce a covering member. The covering members were tested with respect to the peeling strength of the adhesive layer and the transfer of the adhesive and the results of these tests are shown in Table 2.

TABLE 2

|  |  | 1 | 2 | 3 | 4 | 5 | 6 | 7 | 8 | 9 | 10 | 11 |
|---|---|---|---|---|---|---|---|---|---|---|---|---|
| (1)Peeling strength g/25 mm |  | 300 | 300 | 300 | 290 | 280 | 160 | 300 | 300 | 290 | 280 | 160 |
| (2)Transfer of adhesive (at room temperature) | 1 day after | ✕ | △ | ○ | ○ | ◎ | ○ | △ | ○ | ○ | ◎ | ◎ |
|  | 30 days after | ✕ | △ | ○ | ○ | ◎ | ○ | △ | ◎ | ○ | ○ | ◎ |
| (3)Transfer of adhesives (at 80°C) |  | ✕ | ✕ | ○ | ○ | ◎ | ◎ | ✕ | ○ | ◎ | ◎ | ◎ |

◎ : no transfer

○ : slight transfer

△ : fair transfer

✕ : remarkable transfer

(1) Peeling strength: the covering member was attached by means of its adhesive layer to the surface of a steel panel coated with paint. After one day, peeling strength (180°) was measured at 20°C.

3

(2) Transfer of adhesive (at room temperature): the covering member was attached by means of its adhesive layer to the surface of a steel panel coated with paint. The test piece was kept at 20°C for one day or at room temperature for 30 days. The covering member was then peeled from the steel panel and transfer of the adhesive to the steel panel was observed.

(3) Transfer of adhesive (at 80°C): the covering member was attached by means of its adhesive layer to the surface of the steel panel coated with paint. The test piece was kept at room temperature for one day and then at 80°C for 1 hour. The covering member was then peeled from the steel panel and transfer of the adhesive to the steel panel was observed.

EXAMPLE 2

Two kinds of the water-soluble polymer were respectively mixed in an emulsion of a copolymer consisting of 70 parts by weight of n-butyl acrylate and 30 parts by weight of vinyl acetate (50 weight percent solids content) as shown in Table 3. The amounts referred to are parts by weight.

TABLE 3

|  | 12 | 13 | 14 | 15 | 16 | 17 | 18 | 19 | 20 | 21 | 22 |
|---|---|---|---|---|---|---|---|---|---|---|---|
| Emulsion-type adhesive | 100 | 100 | 100 | 100 | 100 | 100 | 100 | 100 | 100 | 100 | 100 |
| Polyvinyl alcohol | – | 0.01 | 0.05 | 5 | 10 | 20 | – | – | – | – | – |
| Sodium alginate | – | – | – | – | – | – | 0.01 | 0.05 | 5 | 10 | 20 |

The resulting emulsion-type adhesives were respectively coated onto a surface of a panel of a polystyrene foam as a base in an amount of 50 g/m² and the adhesive layer was dries to produce a covering member. The results of tests identical to those described in Example 1 except that on aluminium panel was used instead of a steel panel are shown in Table 4.

TABLE 4

| | | 12 | 13 | 14 | 15 | 16 | 17 | 18 | 19 | 20 | 21 | 22 |
|---|---|---|---|---|---|---|---|---|---|---|---|---|
| Peeling strength g/25 mm | | 400 | 400 | 400 | 395 | 390 | 200 | 400 | 400 | 390 | 380 | 180 |
| Transfer of adhesive (at room temperature) | 1 day after | ✕ | △ | ◎ | ◎ | ◎ | ◎ | △ | ◎ | ◎ | ◎ | ◎ |
| | 30 days after | ✕ | △ | ◎ | ◎ | ◎ | ◎ | △ | ◎ | ◎ | ◎ | ◎ |
| Transfer of adhesives (at 80°C) | | ✕ | ✕ | ○ | ◎ | ◎ | ◎ | ✕ | ○ | ◎ | ◎ | ◎ |

EXAMPLE 3

10 parts by weight of a rosin emulsion (60 weight percent solids content) was added to 90 parts by weight of an emulsion of a copolymer consisting of 50 parts by weight of ethyl acrylate and 50 parts by weight of methyl methacrylate (50 parts by weight solids content), and 51 weight percent of an emulsion of the copolymer was obtained. Two kinds of water-soluble polymer were respectively mixed in 100 parts by weight of the emulsion as shown in Table 5. The amounts shown are parts by weight.

## TABLE 5

| | 23 | 24 | 25 | 26 | 27 | 28 | 29 | 30 | 31 | 32 | 33 |
|---|---|---|---|---|---|---|---|---|---|---|---|
| Emulsion-type adhesive | 100 | 100 | 100 | 100 | 100 | 100 | 100 | 100 | 100 | 100 | 100 |
| Polysodium acrylate | – | 0.01 | 0.055 | 5 | 11 | 20 | – | – | – | – | – |
| Polyethylene oxide | – | – | – | – | – | – | 0.01 | 0.055 | 5 | 11 | 20 |

The resulting emulsion-type adhesives were respectively coated onto a surface of craft paper as a base in an amount of 50 g/m² and the adhesive layer was dried to produce a covering member. The results of tests identical to those described in Example 1 are shown in Table 6.

## TABLE 6

| | | 23 | 24 | 25 | 26 | 27 | 28 | 29 | 30 | 31 | 32 | 33 |
|---|---|---|---|---|---|---|---|---|---|---|---|---|
| Peeling strength g/25 mm | | 360 | 360 | 360 | 355 | 350 | 190 | 360 | 360 | 350 | 340 | 160 |
| Transfer of adhesive (at room temperature) | 1 day after | ✕ | △ | ◎ | ◎ | ◎ | ◎ | △ | ◎ | ◎ | ◎ | ◎ |
| | 30 days after | ✕ | △ | ◎ | ◎ | ◎ | ◎ | △ | ◎ | ◎ | ◎ | ◎ |
| Transfer of adhesives (at 80°C) | | ✕ | ✕ | ○ | ◎ | ◎ | ◎ | ✕ | ○ | ◎ | ◎ | ◎ |

EXAMPLE 4

Two kinds of water-soluble polymer were respectively mixed in 100 parts by weight of an emulsion of a copolymer (51.9 weight percent solid content) consisting of 100 parts by weight of butyl rubber latex (50 weight percent solids content), 3 parts by weight of talc, and 1 part by weight of propylene glycol as shown in Table 7. The amounts shown are parts by weight.

## TABLE 7

| | 34 | 35 | 36 | 37 | 38 | 39 | 40 | 41 | 42 | 43 | 44 |
|---|---|---|---|---|---|---|---|---|---|---|---|
| Emulsion-type adhesive | 100 | 100 | 100 | 100 | 100 | 100 | 100 | 100 | 100 | 100 | 100 |
| Gelatine | – | 0.01 | 0.052 | 5 | 10 | 20 | – | – | – | – | – |
| Sodium alginate | – | – | – | – | – | – | 0.01 | 0.052 | 5 | 10 | 20 |

The resulting emulsion-type adhesives were respectively coated onto a surface of a panel of polystyrene foam as a base in an amount of 100 g/m² and the adhesive layer was dried to produce a covering member. The results of a transfer test after thermal aging of the covering members are shown in Table 8.

## TABLE 8

| | | 34 | 35 | 36 | 37 | 38 | 39 | 40 | 41 | 42 | 43 | 44 |
|---|---|---|---|---|---|---|---|---|---|---|---|---|
| (4) Transfer of adhesive after thermal aging | 1 day after | ✕ | △ | ◎ | ◎ | ◎ | ◎ | △ | ◎ | ◎ | ◎ | ◎ |
| | 1 month after | ✕ | △ | ◎ | ◎ | ◎ | ◎ | △ | ◎ | ◎ | ◎ | ◎ |
| | 3 months after | ✕ | ✕ | ◎ | ◎ | ◎ | ◎ | ✕ | ◎ | ◎ | ◎ | ◎ |
| | 6 months after | ✕ | ✕ | ◎ | ◎ | ◎ | ◎ | ✕ | ◎ | ◎ | ◎ | ◎ |

(4) Transfer of the adhesive after thermal aging: the covering member was attached by means of its adhesive layer to surface of a steel panel coated with paint. The test piece was subjected to thermal aging at 40°C for 1 day, 1 month, 3 months, or 6 months. The covering member was then peeled from the steel panel and transfer of the adhesive to the steel plane was observed.

**Claims**

1. A covering member comprising a base and an adhesive layer formed by coating a mixture of an emulsion-type adhesive and a water-soluble polymer onto a surface of the base and drying said coating.

2. A covering member according to claim 1 wherein the base is a plastics foam.

3. A covering member according to claim 2 wherein the plastics foam is a polystyrene foam.

4. A covering member according to any one of the preceding claims wherein the emulsion-type adhesive is an acrylic emulsion.

5. A covering member according to any one of claims 1 to 3 wherein the emulsion-type adhesive is a natural rubber latex.

6. A covering member according to any one of the preceding claims wherein the water-soluble polymer is a polyvinylalcohol.

7. A covering member according to any one of claims 1 to 5 wherein the water-soluble polymer is gelatine.

8. A covering member according to any one of the preceding claims in the form of a masking member.

9. A process for preparing a covering member as defined in any one of the preceding claims which comprises adding the water-soluble polymer to the emulsion-type adhesive and coating the mixture onto a surface of the base.

10. A process for preparing a covering member as defined in any one of claims 1 to 8 which comprises preparing the emulsion type adhesive using, as the aqueous component, an aqueous solution of the water-soluble polymer and coating the thus formed mixture onto a surface of the base.